(19) Europäisches Patentamt / European Patent Office / Office européen des brevets

(11) EP 4 786 691 A1

(12) **EUROPEAN PATENT APPLICATION**
published in accordance with Art. 153(4) EPC

(43) Date of publication:
05.08.2026 Bulletin 2026/32

(21) Application number: 24871403.2

(22) Date of filing: 19.06.2024

(51) International Patent Classification (IPC):
*E02F 9/20* (2006.01)

(52) Cooperative Patent Classification (CPC):
E02F 9/20

(86) International application number:
PCT/JP2024/022261

(87) International publication number:
WO 2025/069599 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 JP 2023163680

(71) Applicant: Hitachi Construction Machinery Co.,
Ltd.
Tokyo 110-0015 (JP)

(72) Inventors:
• TSUTSUMI, Yoshiaki
  Tsuchiura-shi, Ibaraki 300-0013 (JP)
• MORIKI, Hidekazu
  Tsuchiura-shi, Ibaraki 300-0013 (JP)

(74) Representative: MERH-IP Matias Erny Reichl
Hoffmann
Patentanwälte PartG mbB
Paul-Heyse-Straße 29
80336 München (DE)

(54) **WORK MACHINE**

(57) To provide a work machine equipped with a control device that allows for accurate adjustment of the remaining amount within the work device. The controller predicts and calculates the remaining amount within the work device from the dimension information and posture information. The controller displays the predicted value of the calculated remaining amount on a monitor to inform the operator who operates the control lever of the actuator. Alternatively, the controller automatically controls the operation of the actuator based on the predicted value of the calculated remaining amount and performs operation control (posture control) of the work device. Performs operation control (posture control) of the work device.

Fig. 5

**Description**

Technical Field

The present invention relates to a work machine equipped with a control device that has a function for measuring the weight of the load inside of the work device.

Background Art

In recent years, technology related to automatic unloading, which automatically performs the unloading of earth and sand loaded in the work device by controlling the operation of the work device of the work machine, has been developed to reduce the operational burden on the operator and improve work efficiency. During unloading, for example, it is desirable to accurately grasp the weight of the load (cargo) loaded onto the transport vehicle, so if the earth and sand loaded in the work device exceed the specified weight, the excess earth and sand in the work device are unloaded in advance to adjust the weight of the earth and sand loaded in the work device. In this automatic unloading technology, instead of the operator operating the control device, the control device calculates the weight (hereinafter also referred to as the remaining amount) of the load in the work device based on the bottom pressure of the lift arm cylinder and changes in the posture of the work device, and controls the dump operation (also called the tipping operation) and tilt operation (also called the raising operation or crowd operation) of the work device through the extension and contraction control of the lift arm cylinder and bucket cylinder.

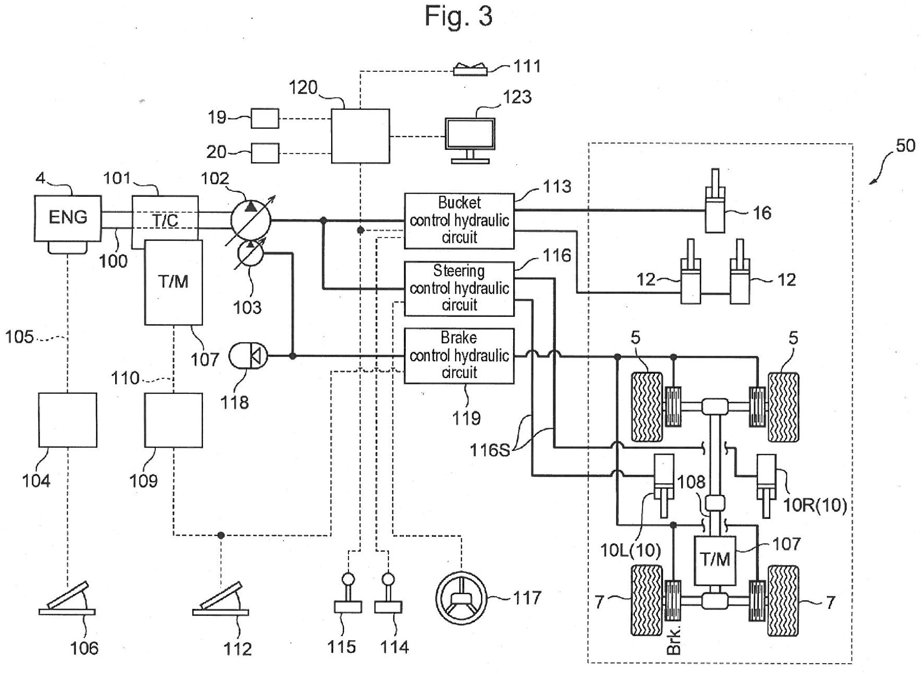

For example, the method described in Patent Literature 1 performs automatic unloading by controlling the work device to agitate according to an agitation pattern until the remaining amount in the work device reaches the target weight (see Fig. 3, etc.).

Citation List

Patent Literature

Patent Literature 1: US 2022/0325497 A1

Summary of Invention

Technical Problem

However, in the method described in Patent Literature 1, the remaining amount in the work device is calculated based on the pressure of the lift arm cylinder during unloading control, and when the calculated remaining amount reaches the target weight, the stopping of the unloading control is initiated. Therefore, after the remaining amount reaches the target weight and the stopping of the unloading control is initiated, in reality, the earth and sand remaining in the work device collapse due to gravity and inertial forces acting on the earth and sand, causing the earth and sand to fall from the work device, making it unavoidable to unload more than the target weight. Additionally, after the stopping of the unloading control is initiated, to reduce the amount of falling soil from the work device, it is conceivable to reduce the operation amount per unit time (= operation speed) in the control and take a long time to unload, but this significantly reduces work efficiency. Even when the operator operates the control lever while viewing the displayed weight of the earth and sand, the same issues exist. In other words, in the conventional method where the remaining amount is calculated based on the pressure of the lift arm cylinder during unloading control and the stopping of the unloading control is initiated based on the calculated remaining amount, accurate unloading cannot be achieved.

Therefore, the objective of the present invention is to provide a work machine equipped with a control device that enables accurate adjustment of the remaining amount.

Solution to Problem

To achieve the above objective, the work machine of the present invention includes a vehicle body, a work device attached rotatably to the vehicle body and configured to load an object, an actuator for driving the work device, a posture information detection device for detecting a posture information of the work device, and a controller for controlling an operation of the actuator and performing discharge control of the object inside of the work device. The controller is configured to calculate, during the discharge control, a predicted value of a weight of the object inside of the work device within a loading state estimated based on a dimension information indicating a geometric shape of the work device and the posture information.

Advantageous Effects of Invention

According to the present invention, since the remaining amount predicted when the stopping of the unloading control is initiated can be calculated, it becomes possible to accurately adjust the remaining amount.

Problems, configurations, and effects other than those described above will be clarified by the following description of the embodiments.

Brief Description of Drawings

Fig. 1 is an external side view of the wheel loader in Embodiment 1.

Fig. 2 is an external perspective view of the wheel loader in Embodiment 1.

Fig. 3 is a system configuration diagram of the wheel loader in Embodiment 1.

Fig. 4 is a system configuration diagram of the bucket remaining amount prediction in the unloading control of the controller in Embodiment 1.

Fig. 5 is a flowchart of the bucket remaining amount prediction in the unloading control of the controller in Embodiment 1.

Fig. 6 is a diagram explaining the dimension information indicating the geometric shape of the bucket and the physical property values of the loading target in Embodiment 1.

Fig. 7 is a diagram explaining an example of the monitor display in the unloading control of the controller in Embodiment 1.

Fig. 8 is a system configuration diagram of the bucket remaining amount prediction in the unloading control of the controller in Embodiment 2.

Fig. 9 is a flowchart of the bucket remaining amount prediction in the unloading control of the controller in Embodiment 2.

Fig. 10 is a diagram explaining the delay of the weight in the bucket in Embodiment 2.

Fig. 11 is a diagram explaining an example of the monitor display in the unloading control of the controller in Embodiment 2.

Fig. 12 is a system configuration diagram of the bucket remaining amount prediction in the unloading control of the controller in Embodiment 3.

Fig. 13 is a flowchart of the bucket remaining amount prediction in the unloading control of the controller in Embodiment 3.

Fig. 14 is a diagram explaining the time change of the Tip angle in Embodiment 3.

Description of Embodiments

The following describes the modes for carrying out the invention with reference to the drawings. In the description of the drawings, the same reference numerals are assigned to the same elements, and redundant explanations are omitted. In the following description, the directions and positions of up, down, left, right, front, and rear are based on the normal usage state of the wheel loader, that is, the state where the wheels are in contact with the ground.

[Embodiment 1]

First, Embodiment 1 for carrying out the present invention will be described.

The vehicle body targeted by the present invention is assumed to be a work machine such as a shovel, which can load earth and sand in the work device and is equipped with a function for measuring the weight of the load inside of the work device. However, in the embodiment of the present invention, it is a wheel loader with a work device. The wheel loader travels on wheels, has a four-wheel drive system, and is a machine with articulated steering, as well as its derivative machines.

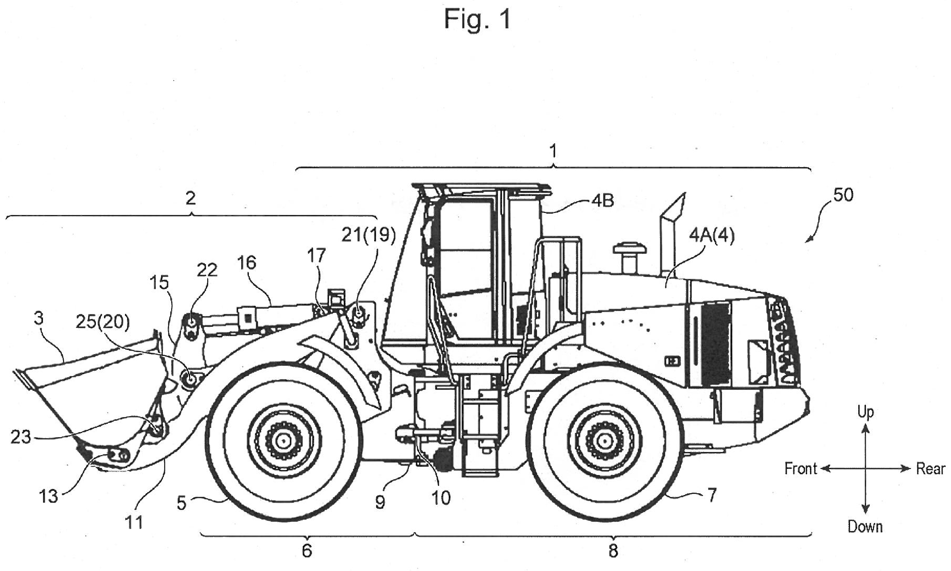

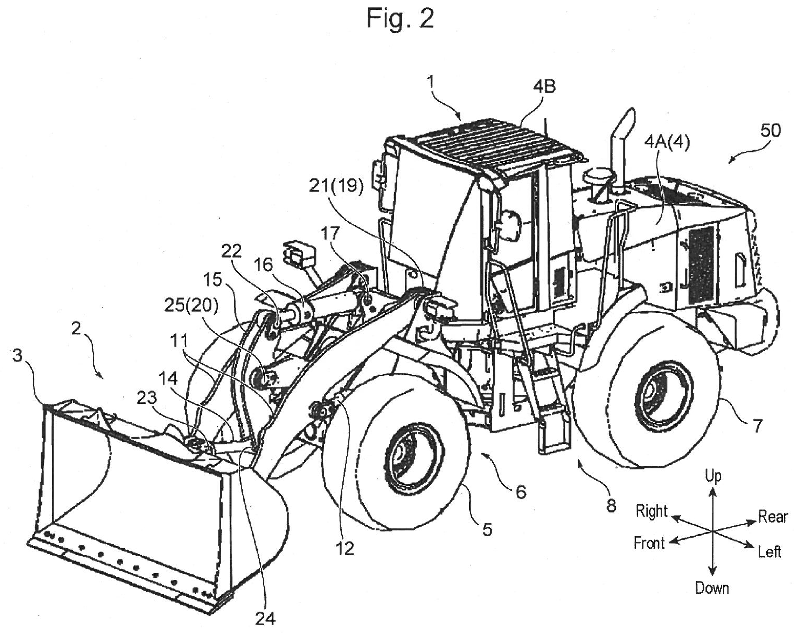

The external views of the wheel loader are shown in Figs. 1 and 2.

The wheel loader 50 has a work equipment 2 at the front of the vehicle body 1 (also called the vehicle body or frame) and is equipped with a bucket 3 for scooping up earth and sand.

The wheel loader 50 is a machine in which the operator, seated in the operator's cabin 4B installed in the vehicle, operates the height and angle of the bucket 3, as well as the direction and speed of the vehicle equipped with wheels, to perform excavation work by scooping up earth and sand on the ground surface with the bucket 3, transport work by moving the scooped earth and sand, and loading work by unloading the scooped earth and sand onto the load-carrying platform of a dump truck.

The vehicle body 1 has a structure in which the front frame 6 with the work equipment 2 and front wheels 5, and the rear frame 8 with the rear wheels 7, engine room 4A, and operator's cabin 4B are connected to be bendable by a center pin 9, and the bending angle can be varied by left and right hydraulic cylinders (also called steering cylinders) 10. The engine room 4A is equipped with an engine 4.

The wheel loader 50 steers by extending and retracting the left and right hydraulic cylinders 10 during travel, changing the angle (bending angle) of the front frame 6 relative to the rear frame 8.

The work equipment 2 consists of a bucket 3 and a lift arm 11 for supporting the bucket 3.

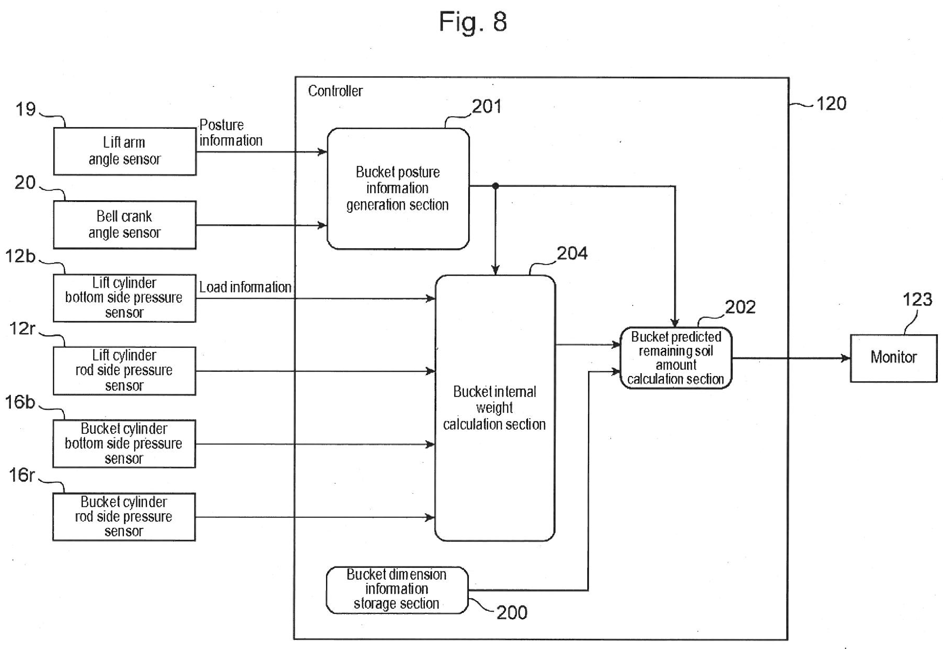

The lift arm 11 is composed of a pair of left and right arms and is connected to the front frame 6 (at the front End) so that it can rotate (tilt) in the vertical direction at fulcrums 21 spaced apart in the left-right direction (width direction). The lift arm 11 is supported by the front frame 6 to allow the angle (height) of the lift arm 11 relative to the front frame 6 to be variable, with a lift cylinder 12 connected (interposed) between the front frame 6 (at the front End) and the lift arm 11 (at the intermediate part). The lift cylinder 12 is equipped with a pressure sensor 12b (Fig. 8) for measuring the internal pressure on the bottom side of the lift cylinder 12 and a pressure sensor 12r (Fig. 8) for measuring the internal pressure on the rod side of the lift cylinder 12. These pressure sensors 12b and 12r can be installed at any location within the piping where the same pressure is present.

The bucket 3 is connected to the lift arm 11 (at the front End) so that it can pivot (tilt) vertically at the fulcrum 13. The bucket cylinder 16 is connected to the front frame 6 (at the front End) via the push rod 14 and the bell crank 15, allowing the angle (tilt) of the bucket 3 relative to the lift arm 11 to be adjustable. The bucket cylinder 16 is connected to the front frame 6 (at the front End) at the fulcrum 17, which is a different position from the fulcrum on the front frame 6 side of the lift cylinder 12. The bell crank 15 is connected to the bucket cylinder 16 (at the tip part) so that it can pivot at the fulcrum 22. The push rod 14 is connected to the bell crank 15 (at the tip part) so that it can pivot at the fulcrum 24. Additionally, the bell crank 15 is connected to the lift arm 11 (at the intermediate part) so that it can pivot at the connection point 25. The bucket 3 is connected to the push rod 14 (at the tip part) so that it can pivot at the fulcrum 23. The push rod 14, bell crank 15, and bucket cylinder 16 are arranged between the pair of left and right lift arms 11. The bucket cylinder 16 is equipped with a pressure sensor 16b (Fig. 8) for measuring the internal pressure on the bottom side of the bucket cylinder 16 and a pressure sensor 16r (Fig. 8) for measuring the internal pressure on the rod side of the bucket cylinder 16. These pressure sensors 16b and 16r can be installed at any location within the piping where the pressure is the same.

The height of the bucket 3 can be varied by the extension and retraction of the lift cylinder 12, and the angle (tilt) of the bucket 3 can be varied by the extension and retraction of the bucket cylinder 16. In other words, the extension and retraction of the lift cylinder 12 cause the lift arm 11 to pivot vertically, raising and lowering the bucket 3. Additionally, the bell crank 15 and push rod 14 are interposed between the bucket cylinder 16 and the bucket 3, and the bucket cylinder force (extension and retraction force) of the bucket cylinder 16 is transmitted to the bucket 3 via the bell crank 15 and push rod 14. Therefore, the extension and retraction of the bucket cylinder 16 cause the bucket 3 to pivot vertically via the bell crank 15 and push rod 14, resulting in the bucket 3 tilting (tilt, crowd, or dump).

A lift arm angle sensor 19, which acquires the angle formed by the lift arm 11 with respect to the front frame 6 (in other words, the relative posture of the lift arm 11 to the front frame 6), is attached to the fulcrum 21, and a bell crank angle sensor 20, which acquires the angle formed by the bell crank 15 with respect to the lift arm 11 (in other words, the relative posture of the bell crank 15 to the lift arm 11), is attached to the connection point 25. These allow the acquisition of the results of the extension and contraction of the lift cylinder 12 and the bucket cylinder 16. In other words, the lift arm angle sensor 19 and the bell crank angle sensor 20 measure the relative posture (relative angle) between the lift arm 11 and the front frame 6, and the relative posture (relative angle) between the bell crank 15 and the lift arm 11. These two angle sensors can measure (detect) the relative posture (relative angle) of the bucket 3 with respect to the front frame 6.

Using Fig. 3, the system configuration of the wheel loader 50 will be described.

The output shaft 100 of the engine 4 is directly connected to the torque converter 101, the hydraulic pump 102, and the brake pump 103. The rotational speed of the engine 4 is controlled by the electrical signal 105 from the engine controller 104, and the engine controller 104 instructs the rotational speed of the engine 4 based on the depression amount of the accelerator pedal 106.

The output shaft of the torque converter 101 is connected to the drive shaft 108 via the transmission 107 and drives the front and rear wheels. The driving force transmitted from the torque converter 101 to the transmission 107 is structured to increase as the rotational speed of the output shaft 100 of the engine 4 becomes greater relative to the output rotational speed of the torque converter 101. By increasing the engine 4's rotational speed through the depression amount of the accelerator pedal 106, the driving force output by the torque converter 101 becomes larger.

The transmission 107, through the electrical signal 110 from the transmission controller 109, can disconnect the output of the torque converter 101 from the drive shaft 108 to reduce the driving force of the front and rear wheels, or reverse the rotational direction to change the direction of the driving force of the front and rear wheels.

The electrical signal 110 from the transmission controller 109 is output to disconnect the connection when the depression amount of the brake pedal 112 exceeds a certain level.

The hydraulic pump 102 outputs a constant flow amount of pressure oil each time the output shaft 100 of the engine 4 rotates once. The pressure oil output from the hydraulic pump 102 is supplied to the lift cylinder 12 and the bucket cylinder 16, which function as hydraulic actuators, via the bucket control hydraulic circuit 113, causing the lift cylinder 12 and the bucket cylinder 16 to extend and retract.

The amount of pressure oil output from the hydraulic pump 102 increases as the rotational speed of the output shaft 100 of the engine 4 increases. Therefore, by increasing the rotational speed of the engine 4 with the depression amount of the accelerator pedal 106, the extension and contraction speed of the lift cylinder 12 and the bucket cylinder 16 (and consequently, the operating speed of the lift arm 11 or the bucket 3) becomes faster.

The bucket control hydraulic circuit 113, when operated by the operator using the lift lever 114, cuts off the connection between the output of the hydraulic pump 102 and the lift cylinder 12 to stop the operation of the lift arm 11, reverses the extension and retraction direction to stop the operation of the lift arm 11, or reverses the extension and retraction direction to switch the up and down operation of the lift arm 11.

The bucket control hydraulic circuit 113, through the operation of the operator's bucket lever 115, cuts off the connection between the output of the hydraulic pump 102 and the bucket cylinder 16 to stop the operation of the bucket 3, or reverses the extension/retraction direction to switch the angle (tilt) of the bucket 3 between forward and backward directions.

The pressure oil output from the hydraulic pump 102 is connected to the left and right steering cylinders 10, which act as hydraulic actuators, via the steering control hydraulic circuit 116, causing the left and right steering cylinders 10 to extend and contract.

When the operator turns the steering wheel 117 to the right, the steering control hydraulic circuit 116 outputs a steering angle signal 116S and simultaneously connects the pressure oil output from the hydraulic pump 102 to contract the right steering cylinder 10R and extend the left steering cylinder 10L, causing the vehicle body to turn right. When the operator turns the steering wheel 117 to the left, the steering control hydraulic circuit 116 outputs a steering angle signal 116S and simultaneously connects the pressure oil output from the hydraulic pump 102 to extend the right steering cylinder 10R and contract the left steering cylinder 10L, causing the vehicle body to turn left.

The pressure oil output from the brake pump 103 is stored in the accumulator 118, and the pressure oil stored in the accumulator 118 controls the braking force of the four wheels via the brake control hydraulic circuit 119.

In the brake control hydraulic circuit 119, the control pressure (braking force) is adjusted based on the amount of depression of the operator's brake pedal 112.

The wheel loader 50 is equipped with a controller 120. The controller 120 is equipped with, for example, a CPU (Central Processing Unit), ROM (Read Only Memory), and RAM (Random Access Memory). The controller 120 realizes each functional block described later by having the CPU read and execute the program code stored in the ROM. RAM is used as a work area when the CPU executes a program. However, the specific configuration of the controller 120 is not limited to this and may be implemented by hardware such as an ASIC (Application Specific Integrated Circuit) or an FPGA (Field-Programmable Gate Array).

The controller 120 is connected to the lift arm angle sensor 19, the bell crank angle sensor 20, the bucket control hydraulic circuit 113, the monitor 123, the unloading start switch 111, and the bucket lever 115. Additionally, via the bucket control hydraulic circuit 113, the values from the lift cylinder rod-side pressure sensor 12r, the bucket cylinder rod-side pressure sensor 16r, the lift cylinder bottom-side pressure sensor 12b, and the bucket cylinder bottom-side pressure sensor 16b are input to the controller 120. Additionally, via the bucket control hydraulic circuit 113, the values from the lift cylinder rod-side pressure sensor 12r, the bucket cylinder rod-side pressure sensor 16r, the lift cylinder bottom-side pressure sensor 12b, and the bucket cylinder bottom-side pressure sensor 16b are input into the controller 120.

In this embodiment, the controller 120, for example, in response to the operation of the operator's bucket lever 115, supplies pressure oil to the bucket cylinder 16 via the bucket control hydraulic circuit 113, controls the extension and contraction of the bucket cylinder 16, performs operation control (posture control) of the bucket 3, and executes unloading control of the earth and sand as the object loaded in the bucket 3. Also, during this unloading control, the controller 120 calculates the predicted value of the weight of the earth and sand in the bucket 3 (hereinafter also referred to as the remaining amount) based on part of the input signals, and outputs the calculated result to the monitor 123 and part of the bucket control hydraulic circuit 113. Additionally, during this unloading control, the controller 120 calculates a predicted value of the weight of earth and sand in the bucket 3 (hereinafter referred to as the remaining amount) based on a part of the input signal, and outputs the calculated result to a part of the monitor 123 and the bucket control hydraulic circuit 113.

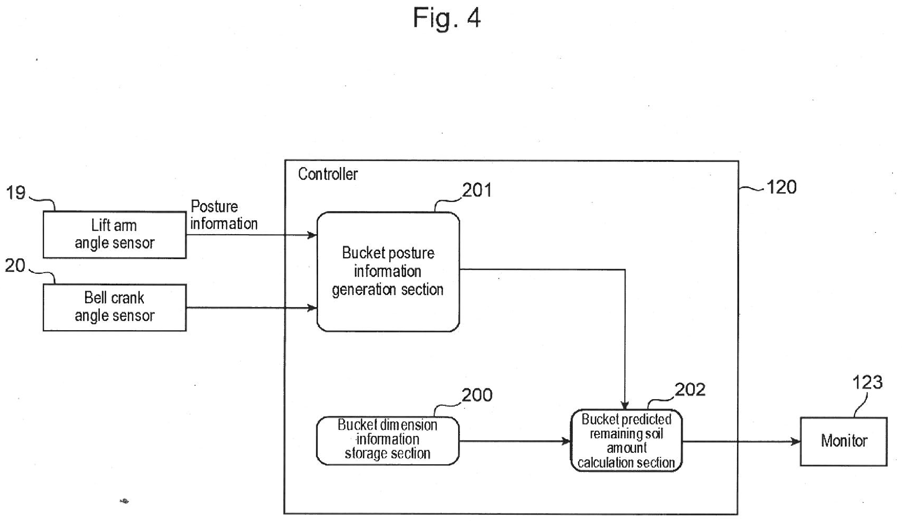

Using Fig. 4, the system configuration for predicting the remaining amount of the bucket 3 in the unloading control of the controller 120 will be described.

This system is composed of the lift arm angle sensor 19, the bell crank angle sensor 20, the controller 120, and the monitor 123, and they are connected by electrical wiring that exchanges electrified information. The controller 120 includes functional blocks for executing computational processing, such as a bucket dimension information storage section 200, a bucket posture information generation section 201, and a bucket predicted remaining soil amount calculation section 202. The bucket dimension information storage section (bucket dimension information storage device) 200 can store dimension information indicating the geometric shape of the bucket 3 and may be configured to be located outside the controller 120.

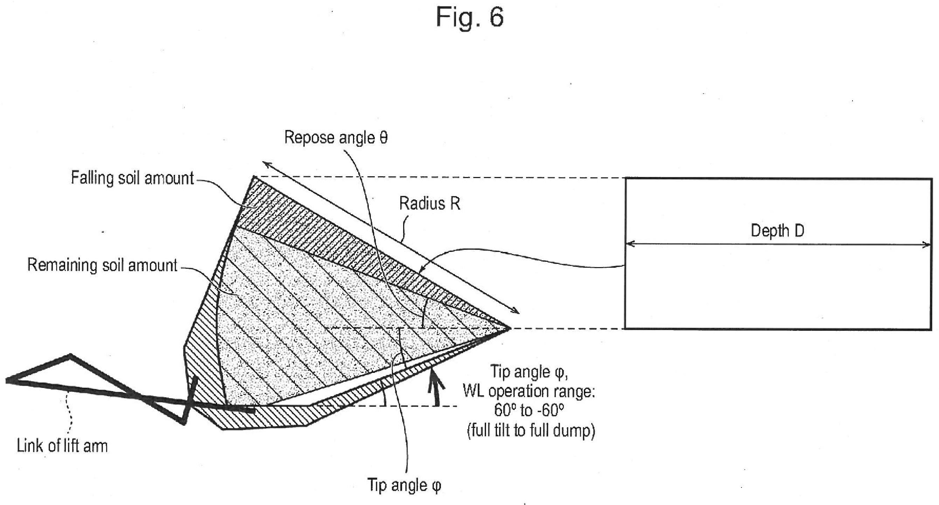

In the bucket posture information generation section 201, the controller 120 generates the tip angle of the bucket 3 relative to the tire contact surface (see Fig. 6) as posture information from the values of the lift arm angle sensor 19 and the bell crank angle sensor 20, which serve as posture information detection devices. The posture information may be directly detected as the angle between the bucket 3 and gravity by an IMU sensor (not shown), and to detect the inclination of the tire contact surface relative to gravity, the IMU sensor may be placed inside the vehicle's operator' s cabin for correction.

In the bucket predicted remaining soil amount calculation section 202, the controller 120 calculates the predicted remaining amount in the bucket 3 from the dimension information of the bucket 3 stored in the bucket dimension information storage section 200 and the posture information of the bucket 3 (the tip angle of the bucket 3 relative to the tire contact surface) generated in the bucket posture information generation section 201. The calculated result is output to the monitor 123. The calculation method is explained in the flowchart.

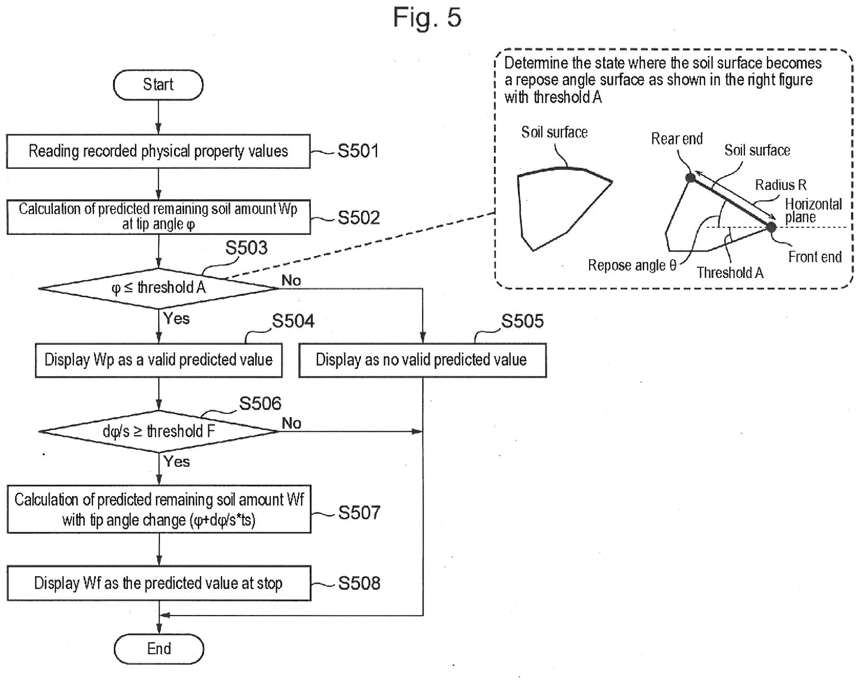

Fig. 5 shows a flowchart of the prediction of the remaining amount in the bucket 3 in the unloading control of the controller 120.

The bucket predicted remaining soil amount calculation section 202 of the controller 120 sequentially processes reading recorded physical property values (S501), Calculation of predicted remaining soil amount Wp at tip angle φ (S502), determination of validity of predicted values (S503), output of display content to monitor 123 (S504, S505), calculation of remaining amount Wf predicted by tip angle change if the rate of change of tip angle is above a certain level (S506, S507), and output of display content to monitor 123 with remaining amount Wf as the predicted value at stop (S508).

In the reading recorded physical property values process (S501), the recorded physical property values of the loading target, such as earth and sand scooped by the bucket 3 and unloaded onto the dump truck's load-carrying platform, are read.

In the Calculation of predicted remaining soil amount Wp at tip angle φ process (S502) for the bucket 3, the following equation (1) using dimension information, posture information, and physical property values is used. Using this equation (1), the predicted remaining amount Wp (predicted value) in the bucket 3 is calculated based on the dimension information, posture information, and physical property values, predicting the loading state (in other words, the predicted loading state) according to the posture information (see also Fig. 6).

Remaining soil amount Wp = N(φ) = Radius R $\times$ Radius R $\times$ (repose angle θ + tip angle φ) $\times$ π/360 $\times$ Depth D $\times$ Density ρ    < Equation 1>

Here, the function N(φ) is the remaining amount predicted at the tip angle φ. Here, the internal amount calculation for the bucket 3, an example of a working device, is simplified and expressed with radius R and angle, but naturally, if the shape and dimensions of the working device differ, the equation should be adjusted accordingly.

In equation (1), the radius R and depth D are values determined by the shape and dimensions of the working device, for example, radius R = 1.2m and depth D = 2.8m. Additionally, the repose angle θ and density ρ are physical property values representing the characteristics of the material assumed as the loading target, for example, assuming dry earth and sand, repose angle θ = 35°, and density ρ = 1.7t/m^3. For example, using these values, equation (1) is simplified to the following equation (2).

< Equation 2>

$$\text{Remaining soil amount Wp} = N(\varphi) \fallingdotseq 0.06(35+\varphi) \text{ [t]... Equation (2)}$$

Also, the remaining amount Wp, due to the nature of the work of the wheel loader, may decrease as the earth and sand inside of the work equipment fall out, but it does not increase except during specific operations. Therefore, it should be reset to the maximum value during any of the unillustrated loading operation, amount calculation start operation, engine-on operation, or when the tip angle φ approaches the maximum value, and thereafter, the value should be updated only in the decreasing direction until it is reset again.

The validity determination process of the predicted value (S503) affirms and displays the remaining amount Wp as a valid predicted value on monitor 123 if the tip angle φ is below threshold A (S504), and if the tip angle φ is greater than threshold A, the predicted value is invalid, and no valid predicted value is output to monitor 123, ending the process (S505). Here, threshold A is an angle threshold according to the physical property value, determining whether the soil surface inside of the work equipment (bucket 3) is at the repose angle surface. In the example of the work equipment, bucket 3, as it tilts forward, the tip angle when the rear End is positioned at the repose angle θ against the front End where the earth and sand flow down should be set as threshold A (refer to the dotted frame in Fig. 5). That is, threshold A is the angle at which the earth and sand inside bucket 3 are supported by the repose angle θ at the front End, so if the tip angle φ is below this threshold A, the calculation of equation (1) holds. Therefore, depending on the shape of bucket 3, for example, threshold A is 50 degrees. In other words, in the validity determination process of the predicted value (S503), the validity of the predicted value of the remaining amount Wp is determined by comparing the angle according to the physical property value (threshold A) with the posture information of bucket 3 (tip angle φ).

Whether the rate of change of the tip angle is above a certain level (S506) is affirmed if the rate of change of the tip angle is above threshold F, proceeding to the calculation step of the remaining amount Wf (S507), and if the rate of change of the tip angle is below threshold F, the process is terminated. In other words, it is determined whether to calculate the remaining amount Wf according to the rate of change of the tip angle. Here, threshold F should determine that the tip angle φ is in the process of tilting forward, and for example, the threshold should be set as a rate of change of the tip angle greater than the values assumed due to noise or vehicle body vibration included in the values output by the lift arm angle sensor 19 or bell crank angle sensor 20 used in the calculation of posture information, so for example, threshold F is 5 [degree/s].

The calculation process of the remaining amount Wf predicted by the change in tip angle (S507) uses the following equation (3) with the assumed time ts until the current rate of change of the tip angle dφ/s becomes 0 to calculate the remaining amount Wf. Here, ts is the time it takes for the vehicle body to actually come to a stop when the operator tries to change from the front tilt operation instruction state by the bucket lever 115 to the stop state, so it is a value calculated by the characteristics of the hydraulic circuit, for example, representing the total time of the reaction time until the operator operates while looking at the screen and the response time from the state where the bucket control hydraulic circuit 113 is connected by the operation of the bucket lever 115 to the state where the operation of the bucket lever 115 is stopped and the connection is cut off. For example, ts is 1 second, which is the sum of the operator reaction time of 0.5 seconds and the machine response time of 0.5 seconds.

< Equation 3>

$$\text{Remaining soil amount } Wf = N(\varphi + d\varphi/s * ts)$$

$$= \text{Radius } R \times \text{Radius } R \times (\text{repose angle } \theta + \text{tip angle } (\varphi + d\varphi/s*ts)) \times \pi/360$$

$$\times \text{Depth } D \times \text{Density } \rho \ldots \text{Equation (3)}$$

In this way, equation (3) is a calculation using the predicted value of the tip angle φ + dφ/s * ts at time ts seconds later. In other words, the remaining amount Wf calculated by this equation (3) is the predicted value of the remaining amount in bucket 3, including the change in the weight of the object in bucket 3 due to the change in the tip angle (φ + dφ/s * ts) that can be predicted from the current operating state of bucket 3 (until it comes to a stop) according to the operating speed dφ/s.

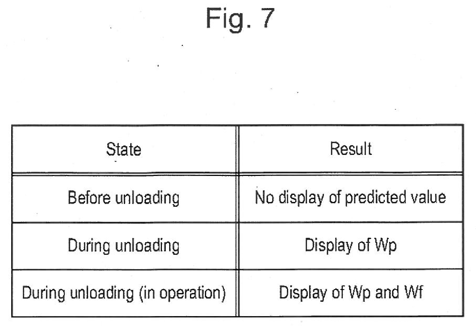

Wf is a different value from Wp, and either one, for example, only Wf may be selected and displayed on monitor 123, but Wp and Wf may be displayed respectively on monitor 123 (S508). By displaying Wp or Wf on monitor 123 and notifying the operator who operates the hydraulic actuator's control lever, the operator can obtain information on Wp or Wf. Fig. 7 shows an example of the display of monitor 123 in the unloading control of controller 120.

Note that when displaying on monitor 123, it is not the remaining amount inside bucket 3, but the decrease in the remaining amount inside bucket 3 corresponds to the discharge amount from inside bucket 3 or the loading amount onto a dump truck, so it may be converted to the discharge amount and displayed on monitor 123.

With the configuration and method described above, it is possible to calculate the remaining amount predicted when the unloading control is stopped during unloading and display it on monitor 123, so the operator operating the control lever can obtain information via monitor 123 on whether returning the control lever to neutral now will achieve the desired loading amount or if it is necessary to continue dumping to increase the loading amount, and by operating the control lever at the appropriate timing, the remaining amount can be accurately adjusted to load the target amount. Especially in vehicles with large machine response times, predicting at the time of stopping unloading control makes it easier to operate the control lever at the appropriate timing.

[Embodiment 2]

Using Fig. 8, another Embodiment 2 in the present invention, different from Embodiment 1, will be explained with additions or changes from the aforementioned Embodiment 1. The system configuration diagram in Embodiment 2 is explained using the system configuration diagram of Fig. 8, not Fig. 4 used in Embodiment 1. Compared to Fig. 4, Fig. 8 adds the lift cylinder bottom side pressure sensor 12b, lift cylinder rod side pressure sensor 12r, bucket cylinder bottom side pressure sensor 16b, bucket cylinder rod side pressure sensor 16r, and the bucket internal weight calculation section 204 as a functional block of controller 120.

In the bucket internal weight calculation section 204, controller 120 acquires load information from the values of pressure sensors 12b, 12r, 16b, 16r, which detect load information (cylinder load) applied to the lift cylinder 12 and bucket cylinder 16 as hydraulic actuators driving bucket 3 (rotating it relative to the vehicle body).

In the bucket internal weight calculation section 204, controller 120 calculates the (current) bucket internal weight (measured value) from the load information acquired from the four types of pressure sensors and the posture information generated by the bucket posture information generation section 201. The calculated bucket internal weight is output to the bucket predicted remaining soil amount calculation section 202. The bucket internal weight is determined as the difference between the force due to gravity acting on the earth and sand in bucket 3 and the pressure sensor values in the state where earth and sand are not loaded in the same posture.

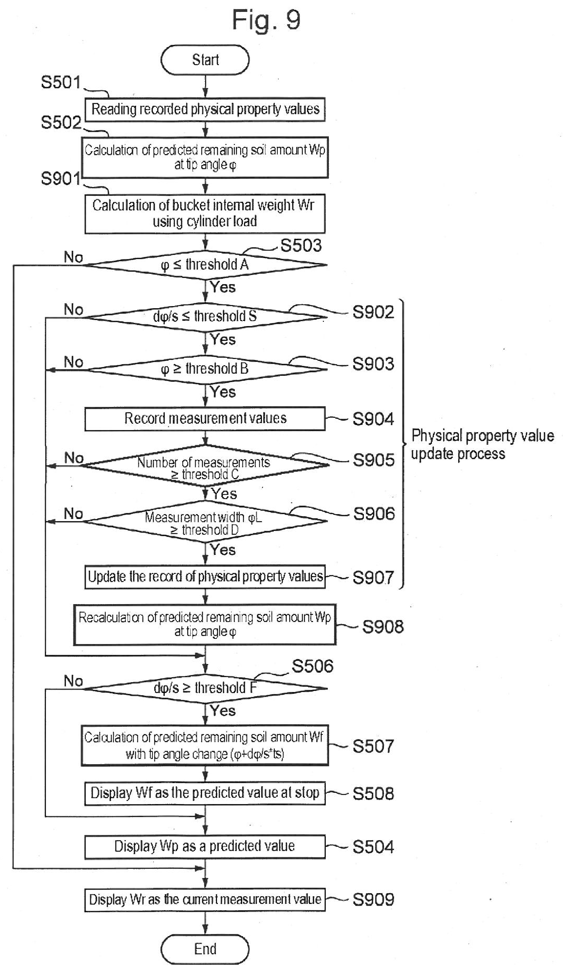

The flowchart in Embodiment 2 is explained using the flowchart of Fig. 9, not Fig. 5 used in Embodiment 1. Compared to Fig. 5, Fig. 9 adds the calculation of bucket weight Wr using cylinder load (S901), physical property value update process (S902-S907), recalculation process of the remaining amount Wp predicted by the tip angle $\varphi$ of bucket 3 (S908), and the display process of Wr (S909).

In the calculation of bucket weight Wr using cylinder load (S901), as described above, the (current) bucket internal weight Wr (measured value) is calculated based on the load information and posture information.

The determination of update conditions included in the physical property value update process (S902 to S907) requires that when the tip angle $\varphi$ is below threshold A (affirmed in S503), the rate of change of the tip angle d$\varphi$/s is below threshold S, and the weight Wr inside the bucket can be measured stably (S902). Here, stable measurement means obtaining the samples necessary for accurate measurement by suppressing the effects of sensor noise and the like. Therefore, for example, if the measurement system, including the angle sensor, can obtain measurement samples every 0.1 seconds, and averaging 10 measurement samples is sufficient for measurement accuracy, and a stable measurement can be achieved at an angular velocity of 10 degrees/second, then threshold A should be set to 50 degrees and threshold S to 10 degrees/second. Regarding the angular velocity at which stable measurement can be achieved, for example, it can be determined based on the expected value when the operator tilts the bucket lever 115 by about 10% to 50% to determine that the control valve is stably held in the dump position. Furthermore, by adding a determination (S903) that the tip angle $\varphi$ is above threshold B, and setting threshold B to -10 degrees as a determination value for when the bottom surface of bucket 3 approaches the soil surface, it is advisable not to update the value if the tip angle $\varphi$ decreases too much at the front where sufficient measurement samples are obtained, such as when the tip angle $\varphi$ is small at the start of processing, which may cause earth and sand to adhere to bucket 3. Also, after determining these thresholds A, S, and B, since the measurement values are stable, they are recorded (S904), and a determination (S905) is added that the number of records is at least threshold C, for example, setting threshold C to 20 as a sufficient number of samples, so that when 20 samples are obtained, the process can move to updating the physical property values, and conversely, if sufficient samples are not obtained, it is advisable not to update the physical property values. Additionally, by adding a determination (S906) that the range $\varphi$L of the tip angle values included in the measured tip angle $\varphi$ is at least threshold D, for example, setting threshold D to 20 degrees, it is possible to ensure a minimum range (= difference) in the average value when updating the physical property values, making it less likely to result in biased physical property values due to noise and the like.

As a result, in the physical property value update process (S902 to S907), when threshold A is set at 50 degrees and threshold S at 10 degrees/second, and the constant t tip angle change is 10 degrees/second, 10 samples of 50 degrees, 49 degrees, 48 degrees, ..., 41 degrees are obtained in the one second after the tip angle becomes 0 degrees, and their average value is a tip angle of 45.5 degrees. Similarly, the average value for the subsequent 10 samples is a tip angle of 35.5 degrees. This is because, even when threshold B is set at -10 degrees, threshold C at 20, and threshold D at 20 degrees, the same process is applied as these thresholds are satisfied. When using threshold C or threshold D, it is advisable to calculate the average value using the samples obtained at the point when these thresholds are met. For example, it is good to calculate the average value using half the number of samples that meet threshold C in descending order of tip angle $\varphi$ included in the record, and then calculate the average value with the remaining half.

By using the obtained values to solve simultaneously so that the remaining amount Wp (predicted value) calculated by equation (1) matches the bucket internal weight Wr (measured value) calculated using the cylinder load at that time, the repose angle $\theta$ and density $\rho$ can be calculated (corrected). For example, when using the calculated values at postures of 45.5 degrees and 35.5 degrees as described, the repose angle $\theta$ and density $\rho$ can be calculated (corrected) by solving the following two equations (4) simultaneously.

<Equation 4>

$$N(\varphi=45.5\text{deg})=Wr(\text{average of measured values at 50deg, 49deg...41deg})$$

$$N(\varphi=35.5\text{deg})=Wr(\text{similarly, average of measured values at 40deg,}$$

$$39\text{deg...31deg})...\text{Equation (4)}$$

Update the record of physical property values with the calculated repose angle $\theta$ and density $\rho$ values (S907), and then recalculate the remaining amount Wp using the updated physical property values in equation (1) (S908). Furthermore, when processing is repeated in the order of the flowchart thereafter, the updated values are read as the recorded physical property values in the first step (S501).

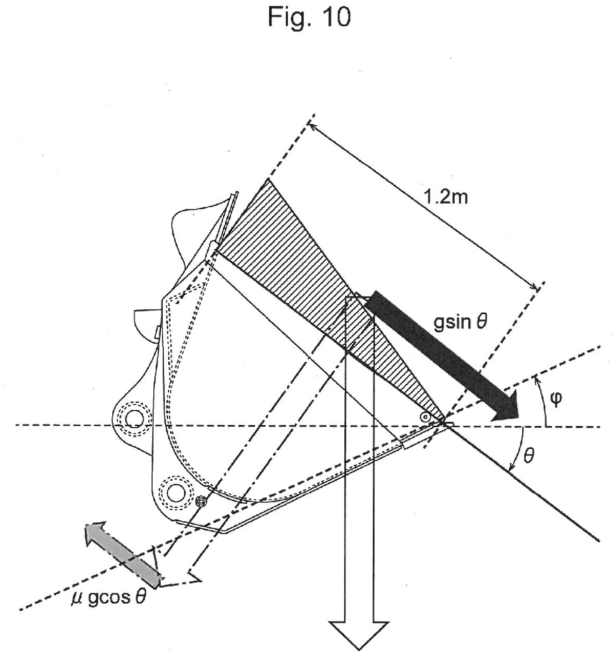

Here, it is advisable to reflect the delay amount until the earth and sand flow out from inside the bucket 3 in the measured value of Wr. For example, if the motion of earth and sand flowing out from inside the bucket 3 due to gravity is expressed by the following equation (5), assuming the length from the front End to the rear End inside the bucket 3 is 1.2m, the time required for the earth and sand to completely fall is calculated as m=1.4 seconds, and it takes 1.4 seconds for the predicted value to become Wr after the posture changes (see also Fig. 10).

<Equation 5>

$$\text{Acceleration } a = g(\sin\theta - \arctan\theta\cos\theta)...\text{Equation (5)}$$

Wr can be calculated as the total amount of the posture 1.4 seconds prior + the dynamic weight based on the posture change in the most recent 1.4 seconds (the delay caused in Wr by the posture change in the most recent 1.4 seconds).

Assuming the posture change is constant, Wr can be calculated by the following equation (6). That is, Wr calculated by equation (6) includes the delay caused in the measured value by the change in the most recent posture information.

<Equation 6>

$$Wr(t) = (N(\varphi(t-m)) + N(\varphi(t)))/2...\text{Equation (6)}$$

If the posture change is not constant, it is advisable to calculate the release amount by equation (5) and integrate it according to each moment. It is also conceivable to set the threshold S to a value small enough to ignore the time m required for the earth and sand to completely fall, instead of calculating such a delay amount to improve accuracy.

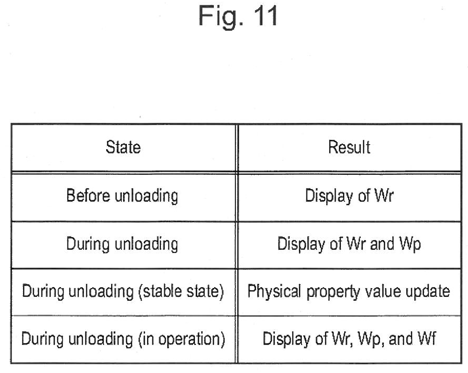

In the display processing of Wr (S909), the calculated Wr is displayed on the monitor 123 as the current measured value (basically always). Fig. 11 shows an example of the display on monitor 123 in the unloading control of controller 120.

By the configuration and method described above, the physical property values such as repose angle θ and density ρ can be obtained using the calculation result of the bucket internal weight Wr with the cylinder load. Therefore, even if the recorded physical property values at the start of processing differ from the physical property values of the earth and sand stored in the work device, the remaining amount will be calculated using the physical property values of the earth and sand stored in the work device, allowing for a more accurate remaining amount to be calculated and displayed on monitor 123, enabling the operator to adjust the remaining amount more accurately.

[Embodiment 3]

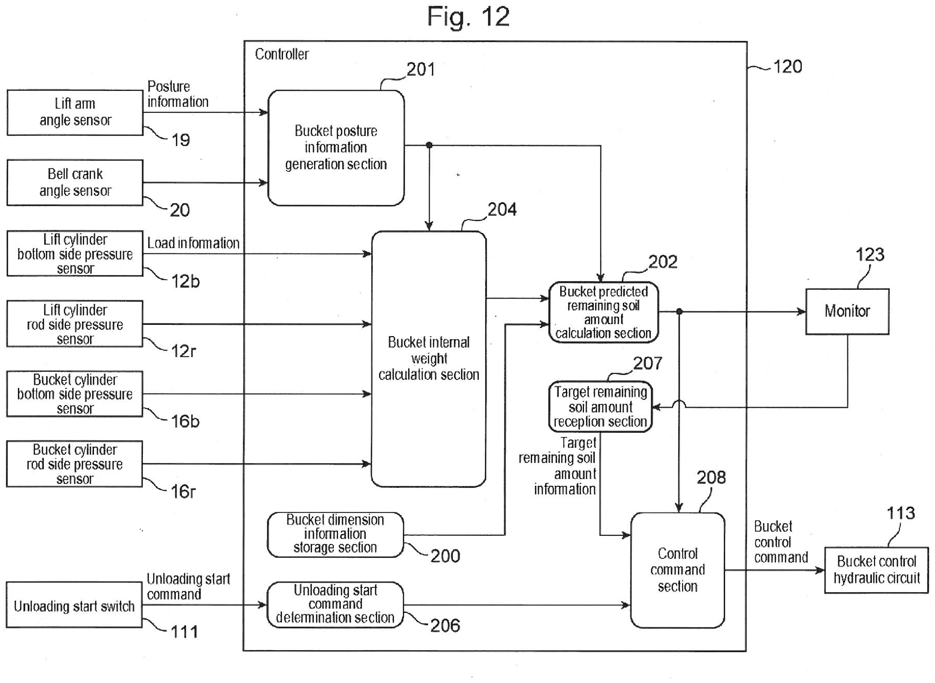

Using Fig. 12, another Embodiment 3 in the present invention will be described, highlighting the additions and changes from the aforementioned Embodiment 2. The system configuration diagram in Embodiment 3 is explained using the system configuration diagram of Fig. 12, instead of Fig. 8 used in Embodiment 2. Compared to Fig. 8, Fig. 12 includes the addition of the unloading start switch 111, the unloading start command determination section 206, the target remaining soil amount reception section 207, and the control command section 208 as functional blocks of the controller 120, as well as the bucket control hydraulic circuit 113.

In the unloading start command determination section 206, the presence (output) of the unloading start command (unloading start information) instructing the start of unloading of bucket 3 based on the input from the unloading start switch 111 is determined. It is also possible to output the unloading start command by inputting operation signals such as from the bucket lever 115. In the target remaining soil amount reception section 207, the input of the target remaining amount information, which is the target value of the amount to be changed from bucket 3, is received from monitor 123. Instead of the target remaining amount information, the input of the target release amount information may be accepted.

In the control command section 208, to electronically control the control valve that controls the supply and discharge of pressure oil to the lift cylinder 12 and bucket cylinder 16 as hydraulic actuators, the bucket control command as an electronic control command is output to the bucket control hydraulic circuit 113.

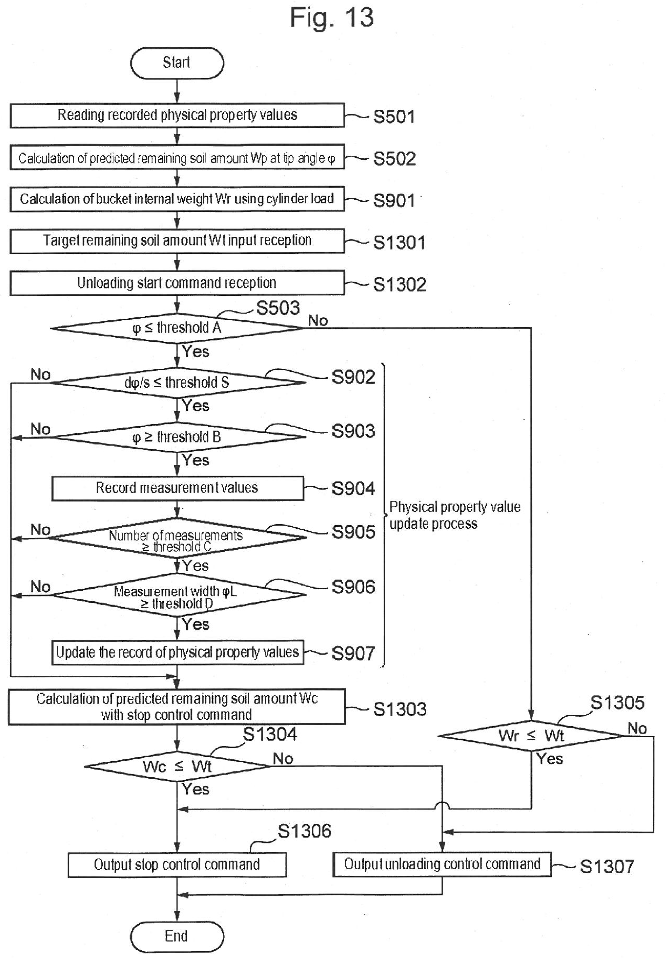

The flowchart in Embodiment 3 is explained using the flowchart of Fig. 13, instead of Fig. 9 used in Embodiment 2. Compared to Fig. 9, Fig. 13 includes the addition of the target remaining soil amount Wt input reception (S1301), the unloading start command reception (S1302), the remaining amount Wc calculation process by the stop control command (S1303), the comparison process between Wc and the target remaining amount Wt (S1304), the comparison process between Wr and the target remaining amount Wt (S1305), the stop control command output process (S1306), and the unloading control command output process (S1307).

In the target remaining soil amount Wt input reception (S1301), the target remaining amount input (specified) by the operator using monitor 123 is received. The rated load weight of the dump truck to be unloaded can be registered in advance, and the target remaining amount can be determined to correspond to that load weight. For example, if the bucket internal weight of the wheel loader is loaded with 3t for a dump truck with a rated load weight of 2t, the target remaining amount is set to 2t since 2t will be loaded, and the unloading will continue until the remaining amount in the bucket becomes 2t in the subsequent process, so all of that remaining amount 2t can be loaded onto the dump truck. On the other hand, it is also conceivable to start loading onto the dump truck from a state where the bucket internal weight of the wheel loader is loaded with 3t, and in that case, if the target remaining amount is set to 1t, then in the subsequent process, 2t from 3t to 1t can be loaded onto the dump truck. It is conceivable for the operator to set the usage on monitor 123 to choose either option. In the latter case, the remaining amount can be determined using the bucket internal weight Wr as the bucket internal weight of the wheel loader. Additionally, the unloading target could be a hopper instead of a dump truck, but the process is similar.

In the unloading start command reception (S1302), after the operator moves to a location suitable for unloading earth and sand, the unloading start command is received by operating the bucket lever 115 or the unloading start switch 111.

In the remaining amount Wc calculation process by the stop control command (S1303), if the content of the stop control command includes control to tilt bucket 3 backward, it will not be the remaining amount N predicted by the tip angle of the final posture (tip angle $\varphi$ of the final posture). This is because once the earth and sand have fallen from bucket 3, they do not return to bucket 3. Therefore, it is advisable to calculate and determine the weight unloaded during the stop control command. For example, the remaining amount predicted in the final posture is calculated by the following equation (7). Here, the content of the stop control command is to sufficiently tilt bucket 3 backward at the same angular velocity as the unloading control command that tilts bucket 3 forward.

<Equation 7>

$$Wc = (N(\varphi(-m/2+tc)) + N(\varphi(tc)))/2 \ldots \text{Equation (7)}$$

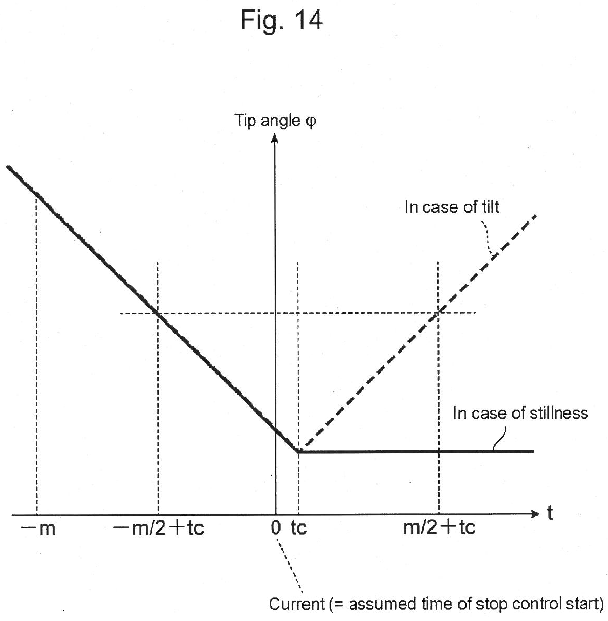

Here, $\varphi(tc)$ indicates the tip angle that tilts most forward during the stop control, and if the machine's response delay is 0.5 seconds, it is the tip angle at 0.5 seconds after the start of the stop control. On the other hand, -m/2+tc is the value obtained by adding the machine's response time tc to half of the negative value -m, which is the time until the earth and sand fall, and it is the value 0.2 seconds before the start of the stop control. As shown in equation (7), it becomes the average value of the predicted value of the most front-tilted tip angle and the predicted value of the tip angle at the time -m/2+tc, which is the same tip angle as at the time m/2+tc when unloading finally Ends. This can be explained by the fact that the amount predicted at the tip angle of m/2+tc is completely unloaded, while the amount of the predicted value of the most front-tilted tip angle is not unloaded at all due to the tilt, and it is the average amount (see Fig. 14).

The comparison process with the target remaining amount Wt (S1304, S1305) uses the result (S503) determined by threshold A as to whether the soil surface is in a state of repose angle degree surface. If the tip angle $\varphi$ is below threshold A and the predicted value is valid, Wc is compared with the target remaining amount Wt (S1304). Otherwise, if the tip angle $\varphi$ is greater than threshold A and the predicted value is invalid, Wr is compared with the target remaining amount Wt (S1305). If Wc or Wr is less than or equal to the target remaining amount Wt, it transitions to the stop control command (S1306), otherwise, if Wc or Wr is greater than the target remaining amount Wt, it executes the unloading control command (S1307). Here, the unloading control command refers to the controller 120 (control command section 208) outputting a signal equivalent to the operator operating the bucket lever 115 in the dump direction as a bucket control command to the bucket control hydraulic circuit 113.

That is, after the control command section 208 of the controller 120 determines that there is an unloading start command (unloading start information), it controls the electronic control command (bucket control command) that electronically controls the control valves of the lift cylinder 12 and the bucket cylinder 16 based on the determination (S1304) from the predicted value (remaining amount Wc) after the weight change of the object in the bucket 3 and the target remaining amount Wt (or target discharge amount) (S1306, S1307).

With the configuration and method described above, it becomes possible to accurately adjust the remaining amount using the predicted remaining amount when the unloading control stop is initiated by control rather than by the operator, thus having the effect of not being influenced by the operator's reaction speed.

[Summary of Embodiments 1-3]

As described above, the work machine (wheel loader 50) of this example includes a vehicle body, a work device (bucket 3) that is rotatably attached to the front of the vehicle body and can load objects, an actuator that drives (rotates) the front work device, a posture information detection device (lift arm angle sensor 19, bell crank angle sensor 20) that detects the posture information of the front work device, and a controller (120) that controls the operation of the front actuator and performs discharge control of the front object inside of the front work device. The controller (120) calculates the predicted value of the weight of the front object inside of the work device in the loading state (estimated loading state) based on the dimension information indicating the geometry of the front work device and the front posture information during the front discharge control.

The controller (120) calculates the predicted weight (predicted remaining soil amount Wp) of the object inside of the working device in the loading state estimated based on the dimension information, the posture information, and the physical property values (repose angle $\theta$, density $\rho$) of the object.

The controller (120) determines whether the predicted value is valid or invalid based on the angle (threshold A) corresponding to the physical property value and the posture information (S503 in Fig. 5, etc.).

The controller (120) determines the predicted value to be valid if the posture information is less than or equal to the angle (threshold A) corresponding to the physical property value, and invalid if the posture information is greater than the angle (threshold A) (S503-S505 in Fig. 5).

The controller (120) calculates the predicted value of the weight of the object inside of the work device (predicted remaining amount Wf), including the change in weight of the object inside of the work device due to changes in posture information (tip angle change) that can be predicted from the current operating state of the work device.

The controller (120) calculates the predicted value of the weight of the object inside of the work device (predicted remaining amount Wf), including the change in weight of the object inside of the work device due to changes in posture information from the current operating state to the stopped state.

The controller (120) determines whether to calculate the predicted value of the weight of the object inside of the work device (predicted remaining amount Wf), including the change in weight of the object inside of the work device due to changes in posture information that can be predicted from the current operating state, based on the rate of change of posture information (time change of claw angle) (S506 in Fig. 5, etc.).

The controller (120) calculates the predicted value of the weight of the object inside of the work device (predicted remaining amount Wf), including the change in weight of the object inside of the work device due to changes in posture information that can be predicted from the current operating state, if the rate of change of posture information (time change of claw angle) is equal to or greater than a predetermined rate of change (threshold F) (S506, S507 in Fig. 5, etc.).

The work machine is equipped with a load information detection device (pressure sensors 12b, 12r, 16b, 16r) that detects the load information applied to the cylinders (lift cylinder 12, bucket cylinder 16) as actuators, and the controller (120) calculates the actual measured value (Wr) of the weight of the object inside of the work device based on the load information and posture information during the release control, and corrects the physical property values (repose angle $\theta$, density $\rho$) so that the predicted value (Wp) matches the actual measured value (Wr), and recalculates the predicted value of the weight of the object inside of the work device (predicted remaining amount Wp) (Embodiment 2).

The controller (120) performs correction of the physical property values (repose angle $\theta$, density $\rho$) only when the rate of change of posture information is equal to or less than a predetermined rate of change (threshold S) (S902 in Fig. 9, etc.) (Embodiment 2).

The controller (120) calculates the actual measured value (Wr), including the delay caused by changes in posture information (Embodiment 2).

The controller (120) displays the predicted value (predicted remaining amount Wp) on the monitor (123) to inform the operator who operates the actuator's control device (control lever). This allows for the adjustment of the weight (remaining amount) of the object inside of the work device.

The controller (120) automatically controls the operation of the actuator based on the predicted value (predicted remaining amount Wp) and performs operation control (dump operation and tilt operation) of the work device to adjust the weight (remaining amount) of the object inside of the work device.

The controller (120) includes a receiving section (target remaining soil amount receiving section 207) that receives target weight change amount information (target release amount information or target remaining amount information), which is the target value of the amount to be changed from the work device, a determination section (unloading start command determination section 206) that determines the presence or absence of unloading start information (unloading start command) instructing the start of unloading of the work device, and a control command section (208) that controls the control valve for controlling the supply and discharge of pressure oil to the hydraulic cylinders (lift cylinder 12, bucket cylinder 16) as actuators. The control command section (208) controls the control valve based on the target weight change amount information and the predicted value after the weight change of the object inside of the work device, after determining the presence of unloading start information (S1304 in Fig. 13) (Embodiment 3).

That is, the work machine (wheel loader 50) in this example predicts the remaining amount inside of the work device (bucket 3) from dimension information and posture information, allowing for accurate adjustment of the remaining amount inside of the work device (bucket 3).

According to this example, it is possible to calculate the remaining amount predicted when the stop of unloading control is initiated, allowing for accurate adjustment of the remaining amount.

It should be noted that the present invention is not limited to the above-described examples and includes various modifications. For example, the above-described examples are detailed to clearly explain the invention and are not necessarily limited to including all the configurations described.

Additionally, each of the above configurations, functions, processing units, processing means, etc., may be implemented in hardware by designing some or all of them, for example, as integrated circuits. Furthermore, each of the above configurations, functions, etc., may be implemented in software by having a processor interpret and execute programs that realize each function. Information such as programs, tables, and files that realize each function can be stored in memory, storage devices such as hard disks and SSDs (Solid State Drives), or recording media such as IC cards, SD cards, and DVDs.

Also, the control lines and information lines shown are those considered necessary for explanation and do not necessarily indicate all control lines and information lines on the product. In practice, it may be considered that almost all configurations are interconnected.

Reference Signs List

1: Vehicle body (body), 2: Work equipment, 3: Bucket (work device), 4: Engine, 4A: Engine room, 4B:Operator's cabin, 5: Front wheel, 6: Front frame, 7: Rear wheel, 8: Rear frame, 9: Center pin, 10: Hydraulic cylinder (steer cylinder or steering cylinder) 11: Lift arm 12: Lift cylinder 12b: Lift cylinder bottom side pressure sensor (load information detection device) 12r: Lift cylinder rod side pressure sensor (load information detection device) 14: Push rod 15: Bell crank 16: Bucket cylinder 16b: Bucket cylinder bottom side pressure sensor (load information detection device) 16r: Bucket cylinder rod side pressure sensor (load information detection device) 19: Lift arm angle sensor (posture information detection device) 20: Bell crank angle sensor (posture information detection device) 50: Wheel loader (work machine) 120: Controller 111: Unloading start switch 113: Bucket control hydraulic circuit 123: Monitor

**Claims**

1. A work machine comprising:

   a vehicle body;
   a work device attached rotatably to the vehicle body and configured to load an object;
   an actuator for driving the work device;
   a posture information detection device for detecting a posture information of the work device; and
   a controller for controlling an operation of the actuator and performing discharge control of the object inside of the work device,
   wherein the controller is configured to calculate, during the discharge control, a predicted value of a weight of the object inside of the work device within a loading state estimated based on a dimensional information indicating a geometry of the work device and the posture information.

2. The work machine according to claim 1,
   wherein the controller is configured to calculate the predicted value of the weight of the object inside of the work device within a loaded state estimated based on the dimensional information, the posture information, and the physical property values of the object.

3. The work machine according to claim 2,
   wherein the controller is configured to determine whether the predicted value is valid or invalid based on the angle corresponding to the physical property values and the posture information.

4. The work machine according to claim 3,
   wherein the controller is configured to determine the predicted value to be valid if the posture information is equal to or less than the angle corresponding to the physical property values, and invalid if the posture information is greater than the angle corresponding to the physical property values.

5. The work machine according to claim 1,
   wherein the controller is configured to calculate the predicted value of the weight of the object inside of the work device, including the change in weight of the object inside of the work device due to changes in posture information that can be predicted from the current operating state of the work device.

6. The work machine according to claim 5,

wherein the controller is configured to calculate the predicted value of the weight of the object inside of the work device, including the change in weight of the object inside of the work device due to changes in posture information from the current operating state to the stopped state.

7. The work machine according to claim 5.
wherein the controller is configured to determine whether to calculate the predicted value of the weight of the object inside of the work device, including the change in weight of the object inside of the work device due to changes in posture information that can be predicted from the current operating state, based on the rate of change of the posture information.

8. The work machine according to claim 7,
wherein the controller is configured to calculate the predicted value of the weight of the object inside of the work device, including the change in weight of the object inside of the work device due to changes in posture information that can be predicted from the current operating state, if the rate of change of the posture information is equal to or greater than a predetermined rate of change.

9. The work machine according to claim 2,

further comprising a load information detection device for detecting load information applied to the cylinder as the actuator, and wherein the controller is configured to calculate a actual measured value of the weight of the object inside of the work device based on the load information and the posture information during the discharge control, and corrects the physical property values so that the predicted value matches the actual measured value, thereby calculating the predicted value of the weight of the object inside of the work device.

10. The work machine according to claim 9,
wherein the controller is configured to perform the correction of the physical property values only if the rate of change of the posture information is equal to or less than a predetermined rate of change.

11. The work machine according to claim 9,
wherein the controller is configured to calculate the actual measured value, including the delay caused in the actual measured value due to changes in the posture information.

12. The work machine according to claim 1,
wherein the controller is configured to display the predicted value on a monitor to inform the operator who operates the actuator's control device.

13. The work machine according to claim 1,
wherein the controller is configured to automatically control the operation of the actuator based on the predicted value and perform an operation control of the work device to adjust the weight of the object inside of the work device.

14. The work machine according to claim 13,

wherein the controller comprises;
a receiving section for receiving target weight change amount information, which is the target value of the amount of weight change from the work device;
a determination section for determining the presence or absence of discharge start information instructing the start of discharge of the work device; and
a control command section for controlling a control valve that controls the supply and discharge of pressure oil to the hydraulic cylinder as the actuator,
wherein the control command section is configured to control the control valve based on the target weight change amount information and the predicted value after the weight change of the object inside of the work device, after determining the presence of discharge start information.

Fig. 1

Fig. 2

EP 4 786 691 A1

Fig. 3

## Fig. 4

Controller ~120

19 — Lift arm angle sensor → Posture information →

20 — Bell crank angle sensor →

201 — Bucket posture information generation section

200 — Bucket dimension information storage section →

202 — Bucket predicted remaining soil amount calculation section →

123 — Monitor

EP 4 786 691 A1

## Fig. 5

Start

Reading recorded physical property values — S501

Calculation of predicted remaining soil amount Wp at tip angle φ — S502

S503

φ ≤ threshold A — No

Yes

S504 — Display Wp as a valid predicted value

S505 — Display as no valid predicted value

S506

dφ/s ≥ threshold F — No

Yes

Calculation of predicted remaining soil amount Wf with tip angle change (φ+dφ/s*ts) — S507

Display Wf as the predicted value at stop — S508

End

Determine the state where the soil surface becomes a repose angle surface as shown in the right figure with threshold A

Soil surface

Rear end    Soil surface

Radius R

Horizontal plane

Front end

Repose angle θ    Threshold A

EP 4 786 691 A1

# Fig. 6

Falling soil amount

Repose angle θ

Radius R

Remaining soil amount

Depth D

Tip angle φ,
WL operation range:
60° to -60°
(full tilt to full dump)

Tip angle φ

Link of lift arm

EP 4 786 691 A1

# Fig. 7

| State | Result |
|---|---|
| Before unloading | No display of predicted value |
| During unloading | Display of Wp |
| During unloading (in operation) | Display of Wp and Wf |

## Fig. 8

EP 4 786 691 A1

# Fig. 9

```
                    ( Start )
                        │
S501 ─┐                 ▼
      └─ Reading recorded physical property values
                        │
S502 ─┐                 ▼
      └─ Calculation of predicted remaining soil amount Wp
         at tip angle φ
                        │
S901 ─┐                 ▼
      └─ Calculation of bucket internal weight Wr
         using cylinder load
                        │
                        ▼              ─ S503
   No ◄────────── φ ≤ threshold A
                        │ Yes
                        ▼
   No ◄────────── dφ/s ≤ threshold S        ─ S902
                        │ Yes
                        ▼
   No ◄────────── φ ≥ threshold B            ─ S903
                        │ Yes
                        ▼
             Record measurement values      ─ S904
                        │
                        ▼
   No ◄────────── Number of measurements     ─ S905
                  ≥ threshold C
                        │ Yes
                        ▼
   No ◄────────── Measurement width φL        ─ S906
                  ≥ threshold D
                        │ Yes
                        ▼
      Update the record of physical property values  ─ S907
                        │
                        ▼
      Recalculation of predicted remaining soil amount Wp   ─ S908
      at tip angle φ
                        │
                        ▼              ─ S506
   No ◄────────── dφ/s ≥ threshold F
                        │ Yes
                        ▼
      Calculation of predicted remaining soil amount Wf   ─ S507
      with tip angle change (φ+dφ/s*ts)
                        │
                        ▼
      Display Wf as the predicted value at stop   ─ S508
                        │
                        ▼
         Display Wp as a predicted value    ─ S504
                        │
                        ▼
      Display Wr as the current measurement value   ─ S909
                        │
                        ▼
                    ( End )
```

Physical property value
update process

Fig. 10

# Fig. 11

| State | Result |
|---|---|
| Before unloading | Display of Wr |
| During unloading | Display of Wr and Wp |
| During unloading (stable state) | Physical property value update |
| During unloading (in operation) | Display of Wr, Wp, and Wf |

## Fig. 12

Controller — 120

Lift arm angle sensor — 19 → Posture information → Bucket posture information generation section — 201

Bell crank angle sensor — 20 →

Lift cylinder bottom side pressure sensor — 12b → Load information

Lift cylinder rod side pressure sensor — 12r

Bucket cylinder bottom side pressure sensor — 16b

Bucket cylinder rod side pressure sensor — 16r

→ Bucket internal weight calculation section — 204

→ Bucket predicted remaining soil amount calculation section — 202 → Monitor — 123

Target remaining soil amount reception section — 207

Target remaining soil amount information

Bucket dimension information storage section — 200

Unloading start switch — 111 → Unloading start command → Unloading start command determination section — 206

→ Control command section — 208 → Bucket control command → Bucket control hydraulic circuit — 113

## Fig. 13

```
                    ┌─────────┐
                    │  Start  │
                    └────┬────┘
                         │
    ┌────────────────────────────────────────┐
    │  Reading recorded physical property values │ ～ S501
    └────────────────────┬───────────────────┘
                         │
    ┌────────────────────────────────────────────────┐
    │ Calculation of predicted remaining soil amount Wp at tip angle φ │ ～ S502
    └────────────────────┬───────────────────────────┘
                         │
    ┌────────────────────────────────────────────────┐
    │ Calculation of bucket internal weight Wr using cylinder load │ ～ S901
    └────────────────────┬───────────────────────────┘
                         │
    ┌────────────────────────────────────────┐
    │  Target remaining soil amount Wt input reception │ ～ S1301
    └────────────────────┬───────────────────┘
                         │
    ┌────────────────────────────────────────┐
    │  Unloading start command reception       │ ～ S1302
    └────────────────────┬───────────────────┘
```

S503 — φ ≤ threshold A — No

Yes

S902 — dφ/s ≤ threshold S — No

Yes

S903 — φ ≥ threshold B — No

Yes

Record measurement values — S904

S905 — Number of measurements ≥ threshold C — No

Yes

S906 — Measurement width φL ≥ threshold D — No

Yes

Update the record of physical property values — S907

Physical property value update process

Calculation of predicted remaining soil amount Wc with stop control command — S1303

S1304 — Wc ≤ Wt — No

Yes

S1305 — Wr ≤ Wt — No

Yes

Output stop control command — S1306

Output unloading control command — S1307

End

# Fig. 14

## INTERNATIONAL SEARCH REPORT

| International application No. |
| --- |
| **PCT/JP2024/022261** |

### A. CLASSIFICATION OF SUBJECT MATTER

***E02F 9/20***(2006.01)i
FI: E02F9/20 M

According to International Patent Classification (IPC) or to both national classification and IPC

### B. FIELDS SEARCHED

Minimum documentation searched (classification system followed by classification symbols)

E02F9/20, E02F9/24, E02F9/26, E02F3/43

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2021-85179 A (KOBELCO CONSTRUCTION MACHINERY CO., LTD.) 03 June 2021 (2021-06-03) | 1-2, 12-13 |
| | paragraphs [0029]-[0146], fig. 1-12 | |
| Y | paragraph [0143] | 12 |
| A | paragraphs [0029]-[0146], fig. 1-12 | 3-11, 14 |
| X | JP 2023-126037 A (KOMATSU LTD.) 07 September 2023 (2023-09-07) | 1-2, 13 |
| | paragraphs [0009]-[0165], fig. 1-18 | |
| Y | paragraphs [0009]-[0165], fig. 1-18 | 12 |
| A | paragraphs [0009]-[0165], fig. 1-18 | 3-11, 14 |
| A | JP 2002-4337 A (HITACHI CONSTRUCTION MACHINERY CO., LTD.) 09 January 2002 (2002-01-09) | 1-14 |
| | paragraphs [0008]-[0023], fig. 1-5 | |

✓ Further documents are listed in the continuation of Box C.　　　✓ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 July 2024** | **30 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/022261**

### C. DOCUMENTS CONSIDERED TO BE RELEVANT

| Category* | Citation of document, with indication, where appropriate, of the relevant passages | Relevant to claim No. |
|---|---|---|
| A | JP 2021-55435 A (KOBELCO CONSTRUCTION MACHINERY CO., LTD.) 08 April 2021 (2021-04-08)<br>paragraphs [0024]-[0123], fig. 1-6 | 1-14 |
| A | JP 2019-157362 A (HITACHI CONSTRUCTION MACHINERY CO., LTD.) 19 September 2019 (2019-09-19)<br>paragraphs [0013]-[0123], fig. 1-28 | 1-14 |

Form PCT/ISA/210 (second sheet) (July 2022)

## INTERNATIONAL SEARCH REPORT
### Information on patent family members

International application No.

**PCT/JP2024/022261**

| Patent document cited in search report | | | Publication date (day/month/year) | Patent family member(s) | | | Publication date (day/month/year) |
|---|---|---|---|---|---|---|---|
| JP | 2021-85179 | A | 03 June 2021 | US | 2023/0041186 | A1 | |
| | | | | paragraphs [0025]-[0160], fig. 1-12 | | | |
| | | | | WO | 2021/106411 | A1 | |
| | | | | EP | 4047139 | A1 | |
| | | | | CN | 114651161 | A | |
| JP | 2023-126037 | A | 07 September 2023 | WO | 2023/163090 | A1 | |
| | | | | paragraphs [0009]-[0165], fig. 1-18 | | | |
| JP | 2002-4337 | A | 09 January 2002 | (Family: none) | | | |
| JP | 2021-55435 | A | 08 April 2021 | US | 2024/0044110 | A1 | |
| | | | | paragraphs [0014]-[0139], fig. 1-6 | | | |
| | | | | WO | 2021/065313 | A1 | |
| | | | | EP | 4012112 | A1 | |
| | | | | CN | 114423905 | A | |
| JP | 2019-157362 | A | 19 September 2019 | US | 2020/0208373 | A1 | |
| | | | | paragraphs [0041]-[0151], fig. 1-28 | | | |
| | | | | WO | 2019/172346 | A1 | |
| | | | | EP | 3763886 | A1 | |
| | | | | KR | 10-2020-0030571 | A | |
| | | | | CN | 111051620 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220325497 A1